# EUROPEAN PATENT APPLICATION

(11) **EP 1 166 624 A1**
(43) Date of publication of application: **02.01.2002**
(21) Application number: 00202208.5
(22) Date of filing: 26.06.2000
(51) Int. Cl.: A01G 31/00

(54) **Method for manufacturing a coherent growth substrate and the obtainable growth substrate**

(71) Applicant: Rockwool International A/S, 2640 Hedehusene (DK)
(72) Inventor: De Sauvage-Nolting, Gertus, 3011 TN Rotterdam (NL); Hennissen, Gertrudes Marie, 6019 BS Wessem (NL)
(74) Representative: Prins, Hendrik Willem

(57) **Abstract**

The invention relates to a method for manufacturing a coherent growth substrate on a mineral wool basis, comprising the steps of:
i. providing mineral wool particles;
ii. mixing the mineral wool particles with a binder;
iii. foaming the mixture; and
iv. curing the binder in the foamed mixture with forming of the coherent growth substrate, and to a coherent growth substrate obtainable with said method.

## Description

The present invention relates to a method for manufacturing a coherent growth substrate and to the obtainable growth substrate.

A coherent growth substrate is frequently used at the present time to cultivate plants. Mineral wool is herein formed with the use of a curing binder and optionally a wetting agent and the coherent growth substrate results after curing of the binder. The growth substrate can then be modelled. Plug openings can for instance be arranged in the upper surface and drainage structures in the bottom surface.

Through the cultivation of the plants the growth substrate will be compressed by the weight and the density will increase by about 25 to 100%. It can generally be stated that compressed storage and handling of growth substrate waste not yet used for culture will also result in an increased density.

Waste is created during manufacture of the coherent growth substrate and modelling thereof. Waste also occurs after the use of the coherent growth substrate to cultivate plants.

The invention has for its object to provide a novel coherent growth substrate using fresh and/or used mineral wool particles. In this respect it is noted that the density of the manufactured coherent growth substrate as a whole is lower than that of one or more of its mineral wool constituents. The formed coherent growth substrate is thus more porous. It is moreover also possible to modify in desired respect the water-retaining capacity of the produced coherent growth substrate. It is important herein that density differences may differ locally over for instance the height or the length of the coherent growth substrate.

Finally, it is noted that fresh or used mineral wool may be coherent or not. Thus the invention provides a method for manufacturing a coherent growth substrate on a mineral wool basis, comprising the steps of:
i. providing mineral wool particles;
ii. mixing the mineral wool particles with a binder;
iii. foaming the mixture; and
iv. curing the binder in the foamed mixture with forming of the coherent growth substrate.

The present invention is therefore based on the insight that by inducing a foaming in the mixture of the mineral wool particles pores are formed which remain substantially preserved after curing of the binder, and the density of the finished coherent growth substrate thereby becomes lower than that of at least one of its constituent parts.

A coherent growth substrate is understood to mean a growth substrate of which the matrix, which consists of substantially mineral wool particles, displays cohesion. The coherent growth substrate can thus take the form of block-shaped mats or plant pots or cylindrical plugs or any other practical geometry. A certain degree of bulging of the growth substrate surfaces can however occur here.

The growth substrate is built up from mineral wool particles. That is, a mineral wool particle comprise mineral wool fibres which display mutual cohesion in that they originate from used or non-used growth substrate containing cured binder respectively non-cured binder, or both fibre types or other materials e.g. silicas.

Mineral wool may consist of glass wool, rock wool, slag wool and mixtures thereof. Mineral wool comprises man made vitreous fibres e.g. glass wool. The mineral wool comprises fibres with an average diameter which man vary from 1 to 15 µm, generally from 1 to 10 µm. The average fibre diameter generally amounts to 2-5 µm, such as 4 µm. The fibres can also have a different length and such mineral wool fibres generally have a fibre length in the range of 50 µm to 10 cm.

The density of the mineral wool particles generally lies between 10 and 500 kg/m³. The density usually amounts to between 10-200 kg/m³, such as 30-150 kg/m³, and preferably 30-80 kg/m³.

The mineral wool particles can be obtained from the above described mineral wool starting materials by means of known methods for reducing growth substrate in size. Use can for instance be made of cutting, plucking, chopping, rolling, extrusion and shredding. Recommended are those size-reducing methods wherein the formed particles are fleecy in that mineral wool fibres protrude therefrom. The mineral wool particles are thereby fleecy so that they can easily become mutually entangled and joined together using binder. The use of chopping is preferred in order to obtain particles in the size of 1-10 cm. Shredding is preferred to obtain particles with a size of 0.5-9 mm.

For inducing the foaming of the mixture of mineral wool particles it is required to generate in the mixture gas bubbles. In one option a foaming agent or gas may be injected in the mixture of mineral wool particles. In another option the foaming agent formes in situ gas as a reaction product in the binder curing reaction. An example is the binder system comprising a polyol and an isocyanate. In another option a foaming agent is added which subsequently releases gas. It is noted that for the present invention it is only required that the mixture is foamed such that after curing of the binder a foamed structure is formed. In an example the mineral wool particles may be provided on their surface with a foaming agent and binder. Mixing with foaming agent and binder can take place by causing swirling of the particles or spraying them with both agents. The foaming agent will then foam the fluid comprising binder and other constituents by generating gas, whereby gas bubbles are created. Formed are hollow cores filled with gas and a bubble of fluid therearound. The mineral wool particles will be situated on the surface of these foam bubbles and also fill up the spaces between adjacent bubbles. What is important is that the foamed structure is stable for a length of time such that through curing of the binder the foamed mixture of mineral wool particles acquires a temporary stability and eventually a permanent stability which results in the coherent growth substrate. Preferably, the foamed structure is open cellular, so that the open cell space is available for plant growth and water/air.

It is self-evident that the foaming agent and the binder must be selected such that they are (in the used amounts) in principle not phytotoxic for the plants to be cultured on the growth substrate. For the binder it is of further importance that it be preferably hydrophilic, so that a wetting agent may possibly be dispensed with. If the binder is hydrophobic, a wetting agent is then desirable. It is however possible within the scope of the invention for a combination of mineral wool particles to be used such that, even in the case of hydrophobic binder, the use of a wetting agent can be dispensed with while relatively short sinking times (10-30 seconds) can nevertheless still be realized.

Foaming of the mixture can take place on a conveyor belt or in a mould defining the growth substrate. The mould which is used can be permanent or temporary. In the case of a permanent mould a plastic foil can be envisaged in which the growth substrate must eventually be arranged.

Curing of the binder can take place at temperatures of 10 to 150°C. It is important that a curing temperature is used which does not affect the formed foam structure and the foam stability, or which does so to a limited extent. Curing temperatures are preferably applied of 20 to 60°C, more preferably of 20 to 40°C, such as 20-25°C. These low temperatures provide the advantage that micro-organisms (still) present in the mineral wool particles (for instance from previously used growth substrate) can be retained. It is noted herein that relatively short to relatively long time periods can be used for curing, from 10 seconds to more than 1 day.

A method preferably comprises the steps of
i. providing mineral wool particles;
ii. mixing the mineral wool particles with a binder;
iii. foaming the mixture; and
iv. curing the binder in the foamed mixture with forming of the coherent growth substrate.

By making use of a finer fraction and a coarser fraction of mineral wool particles it is possible to make homogeneous and inhomogeneous distributions of the two fractions as desired. The finer fraction possesses a good water-absorbing and transporting capacity. It is thereby possible for the formed coherent growth substrate to be self-water-absorbing, so that forced wetting or the use of wetting agent can be dispensed with. The coarser fraction of mineral wool particles provides volume and air and thus affords an optimal air environment, which is beneficial for the root environment. It will be apparent that more than two fractions of mineral wool particles of different sizes can also be applied.

In order to obtain an optimum distribution in the water-retaining capacity or other properties of the coherent growth substrate, it is recommended that the first coarser fraction has a particle size of 1 to 10 cm. Optimal is a particle size distribution of between 2-6 cm and more preferably between 3-4 cm. A coarse basic structure for the coherent growth substrate can hereby be shaped. Its density may vary between 30-200 kg/m³, such as 60-150 kg/m³ and on average generally about 80-100 kg/m³.

The second finer fraction preferably has a particle size distribution of 0.5 to 9 mm and preferably of 1-5 mm, such as 3-4 mm. Making use of this coarser and finer fraction makes it possible for the spaces between the coarser fraction to be filled up with a plurality of finer particles, whereby space and optionally passageways are present within the coarser overall structure which are filled with finer mineral wool particles, thereby enabling a rapid first wetting through the whole growth substrate. Its density may vary from about 200-500 kg/m³, such as 200-350 kg/m³.

It will also be apparent that the coarser fraction and the finer fraction can be distributed inhomogeneously, for instance in the form of layers or columns or totaly or random within the coherent growth substrate. The water distribution, air distribution and the absorbing capacity of the growth substrate are hereby adjustable in the desired respect. This adjustment can likewise be chosen subject to the ratio of the coarser fraction and the finer fraction of mineral wool particles. The ratios generally lie between 5:1 and 1:5, and smaller ratios can also be envisaged. The finer fraction will generally be present in a smaller ratio than the coarser fraction.

In order to obtain a coherent product it is important that the binder be present in sufficient quantity. The quantity amounts generally to between 1-10% by weight and preferably between 2-5% by weight.

A number of materials can be used as binder, such as polyurethane acrylates and their copolymers, PEO emulsion, PVA emulsion, PP emulsion, PA emulsion, epoxy resins and phenol resins.

These binders generally have a curing temperature which lies between 10 and 150°C and which can even amount to only 20-40°C, which means that the product is curable at ambient temperature.

The above described relating to the binder also applies for the foaming agent. The foaming agent must be present in a quantity such that the porosity of the coherent growth substrate is actually increased. This implies that waste which is initially less suitable for plant growth due to too high a density is once again made suitable for use in market gardening. A waste problem is hereby removed to a considerable extent.

Diverse foaming, surfactant substances can be used as foaming agent. As example can be mentioned cocamidopropyl hydroxysultaine. Furthermore, a polyurethane emulsion may be used based on a polyol and an isocyanate.

As stated above, some or all mineral wool particles present within the coherent growth substrate according to the invention can originate from growth substrate already used in plant culture. In addition to plant and root remnants, this growth substrate may also contain nutrients. In order to avoid a salt effect it may be desired that these nutrients, usually present as salts, be sufficiently removed prior to the reuse. For this purpose the used growth substrate is washed out with liquid. As many of the micro-organisms harmful to plant growth, such as pathogens, must then be removed from this used growth substrate. This can take place by subjecting the used growth substrate to a heat treatment, which kills particularly these pathogenic micro-organisms. A particular heat treatment by means of composting can be specifically envisaged. This composting takes place under varying aerobic and anaerobic conditions at temperatures up to 80°C, but generally as desired at temperatures up to 55°C, 65°C, or 75°C dependent on the type of composting and the present amount of organic material. Carbon and nitrogen sources present in the used growth substrate are herein composted, which results in a temperature increase which is detrimental to the possibly present pathogenic micro-organisms in particular. Plant-friendly micro-organisms are found however to be less sensitive to these anaerobic composting conditions. After the composting has ended (which can take from 2 days to 12 months, depending particularly on ambient or applied conditions), the used, composted growth substrate is suitable for reducing in size to the mineral wool particles for use in the coherent growth substrate.

As stated above, shredding can be used to form relatively fine mineral wool particles. This shredding produces mineral wool particles with a density distribution of 150 to 400 kg/m³ depending on the shredding intensity. It will be apparent that these particles are per se less suitable for plant culture. Coarser chopping also results in a density increase in the order of 25-50%. However, with the coherent growth substrate according to the invention total densities are also obtainable in the range of 30 to 120 kg/m³, such as 35 to 110 kg/m³ and more particularly 70 to 100 kg/m³, these being densities which are well suitable or highly suitable for plant growth.

It is likewise possible in known manner to add other additives suitable for plant culture to the coherent growth substrate to be formed from mineral wool particles. The addition of organic material such as clay, peat and the like can particularly be envisaged here. Other materials further include perlite and vermiculite.

The present invention likewise relates to the coherent growth substrate obtained by means of the method according to the invention, which is characterized by a structure of mineral wool particles which have formed in a foam structure, the original foam bubble cavities of which are recognizable.

In an embodiment of the method and the coherent growth substrate according to the invention 90% by weight of rock wool was mixed with 10% by weight of polyvinyl alcohol binder and subsequently with 2% by weight of cocamidopropyl hydroxysultaine foaming agent.

The rock wool consisted of a coarse fraction and a fine fraction. The fine fraction consisted of composted and shredded rock wool with a thereby obtained density of 350 kg/m³. The coarse fraction consisted of a chopped, granulated rock wool with a density of 100 kg/m³. The ratio of shredded : chopped rock wool amounted to 3:1.

The mixture was foamed after forming thereof and cured in foamed state at a temperature of 30°C The coherent growth substrate obtained had a total density of 100 kg/m³. The product was used to cultivate plants. These cultivation tests have shown that this growth substrate is suitable for growing flowers such as gerbera, horticultural products such as peppers, cucumbers, tomatoes and the like.

Hereafter examples are given to illustrate the invention without limiting its limiting the invention to the scope thereof.

### Example 1.

A mixture of cource and fine mineral wool particles was formed. The coarse fraction of mineral wool particles has a particle size of about 2,5 - 3 cm and is formed using a mill provided with granulating pins. The coarse fraction has a density of on average 120 kg/m³. The fine fraction of mineral wool particles has a particles size of about 1-5 mm, is formed by shredding and has a density of about 350 - 400 kg/m³.

85 wt.% of the mixture of mineral wool particles (75% fine and 25% corse) is mixed with 15 wt.% polyurethane binder composition.

The binder composition comprises 95 parts polymer polyol (45% dispersion of a polyetherpolyol and a hydroxyl value of 28 mg KOH/gram) and 5 parts triol having a hydroxyl value of 52 mg KOH/gram.

The binder composition comprised further 2.3 parts water, 0,03 parts tert.amine catalyst (bis-(N,N'-dimethylaminoethylether, 0.11 parts stannous octoate, 0.70 parts silicone sufractant, and 30.89 parts 2,2- and 2,4-methyldiisocyanaat.

The mixture was formed and the gas (10₂) formed during binder curing resulted in a foaming of the fluid mixture in a mould of 30 x 30 x 10 cm. The formed coherent plant growth substrate according to the invention was confirmed suitable for growth of cucumbers, paprica, and tomatoes. Growth and harvest yeald were equal or better than under conventional growth conditions. The density of the growth substrate was about 125 kg/m³.

### Example 2.

A similar mixture of mineral wool particles and a similar polyurethane binder composition was used.

40 parts polymer polyol (27% dispersion of a polyetherpolyol with a hydroxyl value of 27 mg KOH/gram), 60 parts triol with a hydroxyl value of 35 KOH/gram, 1.25 parts diethanolamine, 4.5 parts water, 0.125 parts amine catalyst, 0.01 parts dibutyltin dilaurate, and 1.5 parts silicone surfactant.

The mixture was cured as in Example 1 in a mould and had a density of 135 kg/m³. This coherent plant growth substrate was confirmed suitable for plant growth.

### Example 3.

80 wt.% of the mineral wool mixture of example 1 was used in combination with 20 wt.% polyurethane binder. Per 100 parts polyol were used 95 parts polymer polyol (45% dispersion of a polyesterpolyol with a hydroxyl value of 28 mg KOH/gram), 5 parts triol having a hydroxyl value of 52 mg KOH/gram, 2,5 parts water, 0.03 parts tert-amine catalyst (70% bis-N,N'-dimethylaminoethyl)ether, 0.11 parts stannous octoate (catalyst for producing open cellular foam), 0.70 parts silicone surfactant, and 30.89 parts 2,2-methyldiisocyanate (115 index).

The substrate was formed by curing at a average curing temperature of about 25°C. The formed coherent substrate had a density of 100 kg/m³ and is suitable for plant growth.

## Claims

1. Method for manufacturing a coherent growth substrate on a mineral wool basis, comprising the steps of:
i. providing mineral wool particles;
ii. mixing the mineral wool particles with a binder;
iii. foaming the mixture; and
iv. curing the binder in the foamed mixture with forming of the coherent growth substrate.

2. Method as claimed in claim 1, wherein the mixture is foamed by using a foaming agent.

3. Method as claimed in claim 1 or 2, wherein the foaming agent is formed by the curing of the binder.

4. Method as claimed in claim 1-3, wherein a foaming agent is added to the mixture.

5. Method as claimed in claim 1-4, wherein the binder curing takes plase at a temperature of 10-150°C, preferably 20-60°C, most preferred 20-40°C, such as 20-25°C.

6. Method as claimed in claim 5, wherein the mineral wool particles comprise a first fraction of coarser mineral wool particles and a second fraction of finer mineral wool particles.

7. Method as claimed in claim 6, wherein the first coarser fraction of mineral wool particles has a particle size of 1-10 cm, preferably 2-6 cm and more preferably 3-4 cm, and/or wherein the second finer fraction of mineral wool particles has a size of 0.5-9 mm, preferably 1-5 mm, more preferably 3-4 mm.

8. Method as claimed in claim 6 or 7, wherein the coarser mineral wool particles are obtained by chopping, extrusion or rolling.

9. Method as claimed in claims 6-8, wherein the finer mineral wool particles are obtained by shredding.

10. Method as claimed in claims 6-9, wherein the first coarser fraction and the second finer fraction are distributed inhomogeneously in the growth substrate.

11. Method as claimed in claims 6-10, wherein the ratio coarser fraction : finer fraction in the growth substrate amounts to between 5:1 and 1:5, preferably 3:1 and 1:3.

12. Method as claimed in claims 1-11, wherein the binder is added in a quantity of 1-10% by weight, preferably 2-5% by weight.

13. Method as claimed in claims 4-12, wherein the foaming agent is added in a quantity of 1-10% by weight, preferably 2-5% by weight.

14. Method as claimed in claims 1-13, wherein the mineral wool originates from used growth substrate comprising plant and/or root remnants.

15. Method as claimed in claim 14, wherein the used growth substrate is subjected to a heat treatment.

16. Method as claimed in claim 13, wherein the used growth substrate is subjected to a composting, with preferably a prior washing out of nutrients.

17. Method as claimed in claims 1-16, wherein an additive such as an organic material is added to the mineral wool particles.

18. Coherent growth substrate obtainable with the method as claimed in claims 1-17.
